(19) Europäisches Patentamt
European Patent Office
Office européen des brevets

(11) **EP 4 645 149 A1**

(12) **EUROPÄISCHE PATENTANMELDUNG**

(43) Veröffentlichungstag:
**05.11.2025  Patentblatt 2025/45**

(21) Anmeldenummer: **24172983.9**

(22) Anmeldetag: **29.04.2024**

(51) Internationale Patentklassifikation (IPC):
**G06F 30/20** (2020.01)    **G06F 30/15** (2020.01)

(52) Gemeinsame Patentklassifikation (CPC):
**G06F 30/20; G06F 30/27; G06F 30/15**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Robert Bosch GmbH
70442 Stuttgart (DE)**

(72) Erfinder:
• **Rhode, Stephan
76135 Karlsruhe (DE)**
• **Henkelmann, Nicola
71665 Vaihingen/Enz (DE)**

(54) **COMPUTERIMPLEMENTIERTES VERFAHREN ZUR PARAMETRIERUNG EINER SIMULATION**

(57)    Ein allgemeiner Aspekt der vorliegenden Offenbarung betrifft ein computerimplementiertes Verfahren. Das Verfahren umfasst Bestimmen einer Validierungsmetrik auf Basis einer Bestimmung von Koeffizienten unter Verwendung einer Beurteilung einer Trainingsdatenreihe, die erste Ergebnisse einer Simulation mit einer ersten Mehrzahl von Parametrierungen umfasst. Die Beurteilung der Trainingsdatenreihe umfasst das Ergebnis eines Vergleichs zwischen der Trainingsdatenreihe und einer Messdatenreihe in Form einer Augenscheinvalidierung. Das Verfahren umfasst Empfangen einer Testdatenreihe, die zweite Ergebnisse einer Simulation mit einer zweiten Mehrzahl von Parametrierungen umfasst. Das Verfahren umfasst Anwenden der Validierungsmetrik auf die Testdatenreihe und Bestimmen einer Mehrzahl von Validierungswerten in Abhängigkeit der zweiten Mehrzahl von Parametrierungen. Das Verfahren umfasst Bestimmen einer Sollparametrierung für die Simulation auf Basis der Mehrzahl von Validierungswerten.

**Fig. 4**

## Beschreibung

Die vorliegende Erfindung betrifft ein Verfahren zur Parametrierung einer Simulation. Die vorliegende Erfindung betrifft darüber hinaus ein entsprechendes Computersystem, ein entsprechendes Computerprogramm sowie ein entsprechendes computerlesbares Medium oder Signal.

## Stand der Technik

Hochautomatisierte oder autonome Systeme stehen bspw. in der Robotik und der Automobilbranche zunehmend im Fokus.

Simulationen und Modelle spielen eine entscheidende Rolle in der Entwicklung von Technologien wie dem autonomen Fahren. Sie ermöglichen Daten zu sammeln, ohne zwingend auf physische Testaufbauten angewiesen zu sein. Durch hochentwickelte Simulationssoftware können komplexe Szenarien in einer virtuellen Umgebung nachgebildet werden, was eine Vielzahl von Testfällen abdeckt, die in der realen Welt möglicherweise schwer zu reproduzieren sind. Virtuelle Tests bieten Ingenieuren die Möglichkeit, verschiedene Algorithmen, Sensorkonfigurationen und Fahrszenarien effizient zu evaluieren und zu optimieren, ohne dass teure und zeitaufwändige physische Tests durchgeführt werden müssen. Auf diese Weise beschleunigen Simulationen und Modelle den Entwicklungsprozess und tragen zur Sicherheit und Zuverlässigkeit autonomer Fahrzeuge bei.

Die Parametrierung von Simulationsmodellen mithilfe einer Kostenfunktion ist ein zentraler Ansatz, um die Genauigkeit und Effektivität von Simulationen zu verbessern. Dieses Verfahren beinhaltet die Definition einer Kostenfunktion, die die Diskrepanz zwischen den simulierten Ergebnissen und den realen Daten quantifiziert. Durch die Variation der Parameter des Simulationsmodells wird versucht, die Kostenfunktion zu optimieren, wodurch eine bestmögliche Anpassung an die beobachteten Daten erreicht und eine geeignete Parametrierung des Simulationsmodells bestimmt werden kann. Bekannte Verfahren hierfür sind beispielsweise die Maximum-Likelihood-Methode oder die Prediction-Error-Methode. Bei letzterem werden beispielsweise die Distanzen zwischen den durch das Simulationsmodell vorhergesagten Ausgaben und den gemessenen Ausgaben des Systems minimiert. Als geeignete Kostenfunktion wird häufig eine quadratische Fehlerfunktion verwendet. Der numerische Wert der Kostenfunktion jedoch liefert keine Aussage zur Modellqualität. Darüber hinaus ist insbesondere die quadratische Kostenfunktion im Fall von auch nur kleinen Phasenfehlern sehr sensitiv. Daraus folgt, dass eine Optimierung mittels einer Kostenfunktion Phasenfehler sehr stark bestraft, obwohl es eventuell in einem speziellen Anwendungsfall des Simulationsmodells kein Problem darstellt.

Deshalb wird als Gütekriterium für Modelle, Mess- und Testverfahren neben der Reliabilität und Objektivität insbesondere die Validität herangezogen. Im Zusammenhang mit Modellen zur Simulation technischer Prozesse bildet die Validierung hierbei einen Teilprozess innerhalb der Modellbildung. Gegenstand dieser Validierung ist die Beantwortung der im Rahmen der Qualitätssicherung zentralen Frage, ob eine Simulation für ihren Anwendungszweck geeignet ist. Erst durch den Validierungsprozess wird der notwendige Qualitätsnachweis erbracht, dass die Simulationsergebnisse die Realität widerspiegeln bzw. für den Anwendungszweck geeignet sind und für weitere Produktentwicklungsstufen herangezogen werden können.

Die sogenannte operative Validierung dient in diesem Kontext der Qualitätsbewertung des ausführbaren Simulationsmodells und hat beispielsweise in der Fahrzeugtechnik höchste Praxisrelevanz, weil sie unmittelbar das Verhalten des virtuellen Fahrzeugs mit dem des realen Fahrzeugs vergleicht. Für ihre Durchführung ist es nicht notwendig, das konzeptionelle Modell, das der Simulation zugrunde liegt und sehr komplex sein kann, zu kennen. Da die operative Validierung auf einem experimentellen Vergleich von Simulations- und Messdaten basiert, ist sie auf unterschiedlichste Simulationsmodelle und - Werkzeuge anwendbar.

Probleme ergeben sich insbesondere dadurch, dass sich die Modellbildung durch die notwendige Parameterindikation, die anschließende Validierung und einer eventuell sich wiederholenden Parameterindikation im Fall eines unzureichenden Validierungsergebnisses als sehr aufwändig darstellen kann. Deshalb besteht der Bedarf an verbesserten Verfahren zur Modellbildung.

## Offenbarung der Erfindung

Ein erster allgemeiner Aspekt der vorliegenden Offenbarung betrifft ein computerimplementiertes Verfahren. Das Verfahren umfasst Bestimmen einer Validierungsmetrik auf Basis einer Bestimmung von Koeffizienten unter Verwendung einer Beurteilung einer Trainingsdatenreihe, die erste Ergebnisse einer Simulation mit einer ersten Mehrzahl von Parametrierungen umfasst. Die Beurteilung der Trainingsdatenreihe umfasst das Ergebnis eines Vergleichs zwischen der Trainingsdatenreihe und einer Messdatenreihe in Form einer Augenscheinvalidierung. Das Verfahren umfasst Empfangen einer Testdatenreihe, die zweite Ergebnisse einer Simulation mit einer zweiten Mehrzahl von Parametrierungen umfasst. Das Verfahren umfasst Anwenden der Validierungsmetrik auf die Testdatenreihe und Bestimmen einer Mehrzahl von Validierungswerten in Abhängigkeit der zweiten Mehrzahl von Parametrierungen. Das Verfahren umfasst Bestimmen einer Sollparametrierung für die Simulation auf Basis der Mehrzahl von Validierungswerten.

Ein zweiter allgemeiner Aspekt der vorliegenden Offenbarung betrifft ein Computersystem, das dafür ausgelegt ist, das computerimplementierte Verfahren zur Parametrierung einer Simulation gemäß dem ersten allgemeinen Aspekt (oder einer Ausführungsform davon) auszuführen.

Ein dritter allgemeiner Aspekt der vorliegenden Offenbarung betrifft ein Computerprogramm, das dafür ausgelegt ist, das computerimplementierte Verfahren zur Parametrierung einer Simulation gemäß dem ersten allgemeinen Aspekt (oder einer Ausführungsform davon) auszuführen.

Ein vierter allgemeiner Aspekt der vorliegenden Offenbarung betrifft ein computerlesbares Medium oder Signal, das das Computerprogramm gemäß dem dritten allgemeinen Aspekt (oder einer Ausführungsführungsform davon) speichert und/oder enthält.

Das in dieser Offenbarung vorgeschlagene Verfahren nach dem ersten allgemeinen Aspekt (oder einer Ausführungsform davon) kann dazu dienen, ein computerimplementiertes Verfahren zur Parametrierung einer Simulation bereitzustellen. In Beispielen kann die Validierungsmetrik als Kostenfunktion zur Parametrierung der Simulation dienen. Dadurch kann das Verfahren dazu dienen, den Vorgang der Modellbildung zu vereinfachen, indem die Parameteridentifikation bzw. die Parametrierung als Zielwert der Kostenfunktion gleich eine Aussage zur Modellqualität mitliefern kann. In Beispielen kann bei Betrachtung eines Konfidenzintervalls der Validierungsmetrik auch der Grad der Zuverlässigkeit der Parameteridentifikation oder der Anlass zu einem erneuten Training der Validierungsmetrik abgeleitet werden.

Das Verfahren kann dazu dienen, eine objektive Validierungsmetrik bereitzustellen, um eine (vergleichbare) Güte eines (Simulations-)Modells zu bestimmen. In Beispielen kann die Validierungsmetrik in einer Datenbank abgespeichert werden und dazu dienen, zukünftige Simulationen zu validieren. In Beispielen kann die Validierungsmetrik mittels einer Web-App bereitgestellt werden und kann so skaliert werden. Das offenbarte Verfahren kann ermöglichen, die Notwendigkeit physischer Prüfstands- und/oder Testaufbauten in der Entwicklung zu reduzieren und den Einsatz von Simulationen und Modellen in der Produktentwicklung zu fördern. Dies kann vorteilhaft sein, Entwicklungszeiten zu reduzieren. In weiteren Beispielen kann das Verfahren dazu dienen, relevante Metriken in die Validierungsmetrik einfließen zu lassen und beispielsweise korrelierte Metriken zu entfernen. Ein weiterer Vorteil kann darin gesehen werden, dass Konfidenzintervalle bestimmt werden können, die zur Überprüfung der Validierungsmetrik verwendet werden können und beispielsweise Aufschluss über eine eventuell notwendige Erneuerung der Validierungsmetrik geben können.

Weitere Vorteile können darin bestehen, dass Modelle, die mittels der Validierungsmetrik validiert werden, dazu dienen können, Fahrzeugfunktionen, Roboterfunktionen, Gebäudeautomatisierungsfunktionen, Elektrowerkzeugautomatisierungsfunktionen, und/oder Haushaltsgeräteautomatisierungsfunktionen auszulegen, zu entwickeln, zu testen, validieren und/oder zu verifizieren. In Beispielen können die Daten dazu dienen, Maschinelles-Lernen-Modelle zu trainieren, zu testen, und/oder zu validieren. Ein weiterer Vorteil kann darin bestehen, dass die Maschinelles-Lernen-Modelle verwendet werden können, eine Fahrzeugfunktion, eine Roboterfunktion, eine Gebäudeautomatisierungsfunktion, eine Elektrowerkzeugautomatisierungsfunktion, und/oder eine Haushaltsgeräteautomatisierungsfunktion zu steuern und/oder zu regeln.

Einige Begriffe werden in der vorliegenden Offenbarung in folgender Weise verwendet:
Ein "Fahrzeug" kann jegliche Vorrichtung, die Passagiere und/oder Fracht transportiert, sein. Ein Fahrzeug kann ein Kraftfahrzeug (zum Beispiel ein PKW oder ein LKW) sein, aber auch ein Schienenfahrzeug. Ein Fahrzeug kann auch ein motorisiertes Zwei- oder Dreirad sein. Allerdings können auch schwimmende und fliegende Vorrichtungen Fahrzeuge sein. Fahrzeuge können zumindest teilautonom operierend oder assistiert sein.

## Kurzbeschreibung der Figuren

**Fig. 1** illustriert schematisch ein beispielhaftes Verfahren zur Parametrierung einer Simulation.

**Fig. 2** illustriert schematisch eine Mehrzahl von Validierungswerten in Abhängigkeit einer beispielhaften zweiten Mehrzahl von Parametrierungen.

**Fig. 3** illustriert schematisch eine Trainingsdatenreihe und eine Messdatenreihe.

**Fig. 4** illustriert schematisch eine beispielhafte Architektur zur Ausführung des Verfahrens zum Bestimmen einer Validierungsmetrik.

**Fig. 5** illustriert schematisch eine beispielhaftes Ablaufdiagramm zur Ausführung des Verfahrens zur Parametrierung einer Simulation.

**Fig. 6** illustriert schematisch eine Beurteilung von ersten Datenreihen einer Mehrzahl von Simulationen 1 bis 5 in Form eines Boxplots.

## Detaillierte Beschreibung

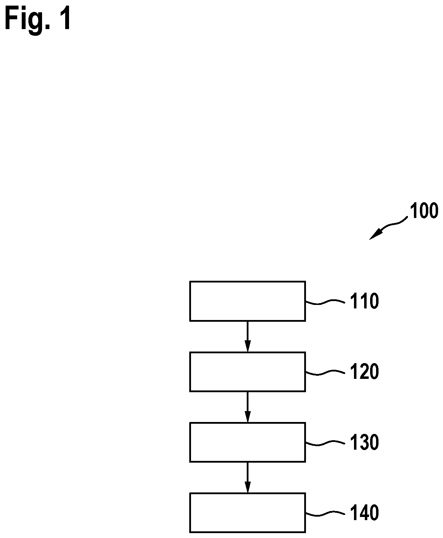

**Fig. 1** ist ein Fluss-Diagramm, das mögliche Schritte des computerimplementierten Verfahrens 100 zur Parametrierung einer Simulation.

Das computerimplementierte Verfahren 100 zur Parametrierung einer Simulation umfasst Bestimmen 110 einer Validierungsmetrik auf Basis einer Bestimmung 111 von Koeffizienten unter Verwendung einer Beurteilung einer Trainingsdatenreihe 11a, die erste Ergebnisse einer Simulation mit einer ersten Mehrzahl von Parametrierungen umfasst, wobei die Beurteilung der Trainingsdatenreihe 11a das Ergebnis eines Vergleichs zwischen der Trainingsdatenreihe 11a und einer Messdatenreihe 11b in Form einer Augenscheinvalidierung umfasst, Empfangen 120 einer Testdatenreihe, die zweite Ergebnisse einer Simulation mit einer zweiten Mehrzahl von Parametrierungen umfasst, Anwenden 130 der Validierungsmetrik auf die Testdatenreihe und Bestimmen einer Mehrzahl von Validierungswerten in Abhängigkeit der zweiten Mehrzahl von Parametrierungen, und Bestimmen 140 einer Sollparametrierung für die Simulation auf Basis der Mehrzahl von Validierungswerten.

Das Verfahren kann das Durchführen einer Mehrzahl von Simulationen mit der ersten Mehrzahl von Parametrierungen und der zweiten Mehrzahl von Parametrierungen umfassen. Die Ergebnisse der Simulationen mit der zweiten Mehrzahl von Parametrierungen liefern die Testdatenreihe. Diese Testdatenreihe kann in Beispielen verwendet werden, die Validierungsmetrik zu testen. Wird die Validierungsmetrik auf die Testdatenreihe angewandt, kann die Mehrzahl von Validierungswerten bestimmt werden. Auf Grundlage dieser Bestimmung kann die Sollparametrierung der Simulation bzw. des Simulationsmodells bestimmt werden.

In Beispielen kann das Verhältnis des Umfangs des Trainingsdatensatzes zu dem Umfang des Testdatensatz 80:20 sein. In Beispielen kann die Zuteilung des Trainingsdatensatzes und des Testdatensatzes auf (Pseudo-)Zufall oder einem Mischen jeweiliger Ergebnisse der Simulation basieren. Zum Beispiel kann dadurch das Risiko reduziert werden, dass zeitlich langsame Veränderungen in den sukzessiv gespeicherten Datenreihen versteckt sind. Zum Beispiel können sich bei zehn Messungen, Reibparameter über die ersten vier Messungen einstellen und dann über die verbleibenden sechs Messungen konstant sein.

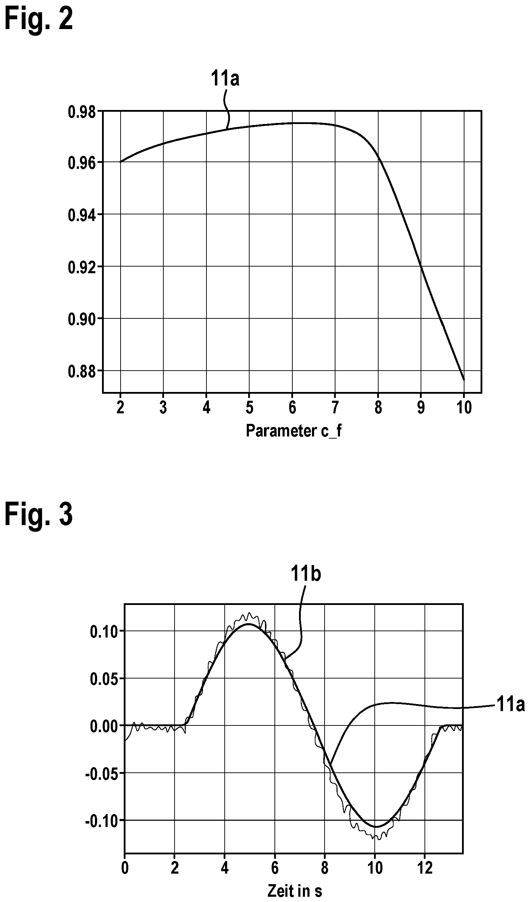

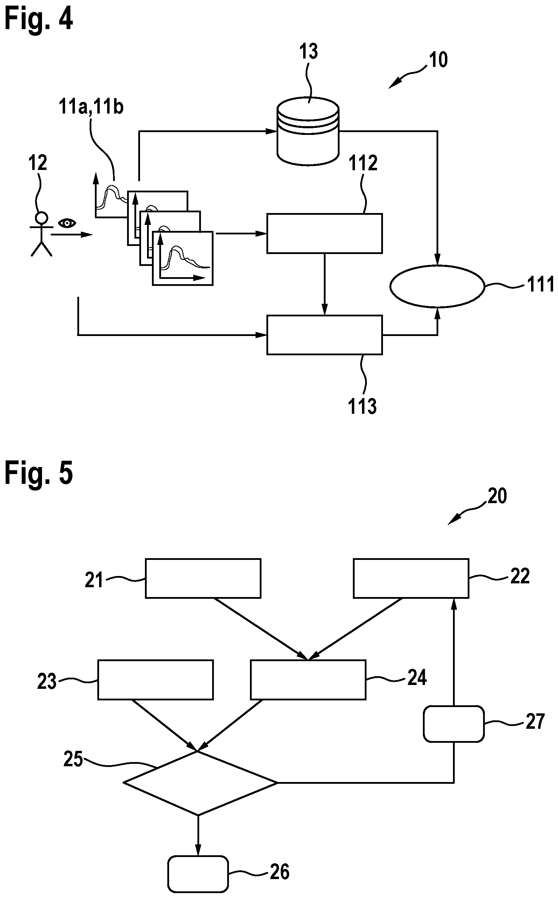

Zum besseren Verständnis sollen Teile des Verfahrens 100 mit Bezug auf **Fig. 5** erklärt werden. Aus einem Systemmodell 21 kann eine Simulation 24 abgeleitet werden. Diese Simulation 24 kann mit einer ersten Mehrzahl von Parametrierungen 22 parametriert werden. Mittels der Simulation 24 mit der ersten Mehrzahl von Parametrierungen 22 kann die Trainingsdatenreihe 11a gewonnen werden. In Beispielen kann ein Experiment 23 bereitgestellt werden. Mittels dieses Experiments kann die Messdatenreihe 11b gewonnen werden. Durch einen Vergleich der Trainingsdatenreihe 11a und der Messdatenreihe 11b kann eine Validierungsmetrik für die Simulation bestimmt werden. In Beispielen kann die Validierungsmetrik eine Aussage über die Qualität einer Simulation umfassen. In Beispielen kann die Validierungsmetrik durch einen Vergleich der Trainingsdatenreihe 11a, die mittels der Simulation 24 gewonnen werden kann, mit der Messdatenreihe 11b, die mittels des Experiments gewonnen werden kann, bestimmt werden. In Beispielen kann ein Ergebnis des Vergleichs und/oder die Beurteilung der Trainingsdatenreihe 11a über eine Benutzer-Schnittstelle eingegeben sein. Anschließend kann die Simulation mit einer zweiten Mehrzahl von Parametrierungen durchgeführt werden. Mittels dieser Simulation mit der zweiten Mehrzahl von Parametrierungen kann die Testdatenreihe gewonnen werden. Wird die Validierungsmetrik nun auf die Testdatenreihe angewandt, so kann eine Mehrzahl von Validierungswerten in Abhängigkeit der zweiten Mehrzahl von Parametrierungen bestimmt werden, wie in **Fig. 2** gezeigt. Beispielsweise kann ein Grenzwert für den Validierungswert festgelegt werden. In Beispielen kann die Sollparametrierung erreicht sein, wenn der Grenzwert durchbrochen ist. In Beispielen kann in Schritt 25 der Validierungswert einer Simulation mit einer Parametrierung der zweiten Mehrzahl von Parametrierungen mit dem Grenzwert verglichen werden und überprüft werden, ob die Sollparametrierung erreicht ist. Ist dies der Fall, wird das Verfahren 100 beendet, Schritt 26. Ist in Schritt 25 der Grenzwert nicht durchbrochen, so kann eine andere Parametrierung gewählt werden, Schritt 27. In Beispielen kann das Bestimmen 140 einer Sollparametrierung für die Simulation ein iterativer Vorgang sein.

In **Fig. 3** ist beispielhaft eine Trainingsdatenreihe 11a einer Simulation in Form einer Zeitreihe und eine Messdatenreihe 11b einer Messung in Form einer Zeitreihe dargestellt. Zum Beispiel kann die Messung Positionswerte einer Zahnstangenlenkung umfassen. Beispielsweise kann der Prototyp einer Zahnstangenlenkung auf einem Prüfstand montiert werden. In Beispielen kann ein Elektrozylinder eine sinusförmige (oder sprunghafte) Kraft auf das Zahnstangenende ausüben. Auf dem Prüfstand kann die Position der geregelten Zahnstange gemessen werden. In Beispielen kann die Position der geregelten Zahnstange der Messdatenreihe 11b entsprechen. In Beispielen kann der gleiche Lastfall in einer Simulation angewandt werden. Das Simulationsmodell kann ein physikalisches Lenkungsmodell und einen dazu gehörigen Positionsregler umfassen. Die Ausgabe der Simulation kann die Zahnstangenposition je nach simuliertem Lastfall umfassen. Die Ausgabe der Simulation kann der Trainingsdatenreihe 11a entsprechen.

In Beispielen kann das Bestimmen 140 der Sollparametrierung das Optimieren oder Nahezu-Optimieren einer Funktion umfassen, die sich aus der Abhängigkeit zwischen der Mehrzahl von Validierungswerten und der zweiten Mehrzahl von Parametrierungen ergibt. **Fig. 2** illustriert schematisch eine Mehrzahl von Validierungswerten in Abhängigkeit einer beispielhaften zweiten Mehrzahl von Parametrierungen. In Beispielen kann das Verfahren das Interpolieren der Mehrzahl von Validierungswerten umfassen. In Beispielen kann die Sollparametrierung einem maximalen oder einem nahezu maximalen Wert der Mehrzahl von Validierungswerten entsprechen. Zur Veranschaulichung soll im Folgenden ein Beispiel gegeben werden. Für ein Fahrzeugmodell ist für ein neu zu vermessendes Fahrzeug in häufigen Fällen die Ecksteifigkeit $c_f$ nicht bekannt. Diese muss in einigen Fällen aus Messungen identifiziert werden. Für eine bekannte Validierungsmetrik können die Messdaten aus einem Experiment mit Simulationsdaten, die unter Verwendung verschiedener Parametrierung, d.h. im vorliegenden Fall verschiedener Werte von $c_f$ erzeugt wurden, verglichen werden. In Beispielen kann sich daraus der in **Fig. 2** gezeigte Verlauf ergeben. Der Parameterwert $c_f$, dem der höchste Validierungswert zugeordnet ist, kann den geeignetsten Parameterwert, d.h. die Sollparametrierung für die Simulation darstellen. Im vorliegenden Beispiel kann $c_f = 6.3$

einen geeigneten Parameterwert, d.h. mindestens einen Teil der Sollparametrierung darstellen.

In Beispielen kann die Sollparametrierung ein Intervall für einen oder mehrere Parameter umfassen. Zur zuverlässigen Auslegung eines technischen Systems, das beispielsweise eine Fahrzeugfunktion, eine Roboterfunktion, eine Gebäudeautomatisierungsfunktion, eine Elektrowerkzeugautomatisierungsfunktion, und/oder eine Haushaltsgeräteautomatisierungsfunktion umfasst, kann es von Relevanz sein, wie zuverlässig Parameter aus einer Messdatenreihe ermittelt werden können. Beispielsweise können bei ungeeigneter Systemanregung oder starkem Messrauschen durch eine einfache Optimierung von Parametern anhand dieser Daten Parametrierungen identifiziert werden, die weit von den tatsächlichen abweichen. In Beispielen ist es deshalb vorteilhaft, einen Bereich einer Sollparametrierung zu bestimmen.

In Beispielen kann das Bestimmen 110 der Validierungsmetrik das Anwenden 112 einer Mehrzahl vorgegebener Metriken auf die Trainingsdatenreihe 11a und die Messdatenreihe 11b umfassen. Das Bestimmen 110 kann Auswählen 113 einer oder mehrerer Metriken aus der Mehrzahl von Metriken auf der Grundlage einer Vorgabebedingung umfassen. In Beispielen kann das Anwenden 112 einer Mehrzahl vorgegebener Metriken auf die Trainingsdatenreihe 11a und die Messdatenreihe 11b das Anwenden einer Mehrzahl vorgegebener Metriken auf eine Kombination aus der ersten Datenreihe 11a und der zweiten Datenreihe 11b umfassen.

Eine Metrik kann einen mathematischen Operator umfassen, der zwei Datenreihen auf einen Skalar abbildet, der mitunter ebenfalls als Metrik bezeichnet werden kann. Beispielsweise kann die Mehrzahl vorgegebener Metriken einen mittleren quadratischen Fehler umfassen, der mathematisch durch folgende Gleichung ausgedrückt werden kann:

$$ MSE = \frac{1}{n} \sum_{i=1}^{n} (Y_i - \hat{Y}_i)^2 $$

In Beispielen kann die Trainingsdatenreihe 11a und/oder die Messdatenreihe 11b eine abgetastete Zeitreihe umfassen. Vorliegend kann die Trainingsdatenreihe 11a $Y_i$ entsprechen und die Messdatenreihe 11b $\hat{Y}_i$ entsprechen. Das Anwenden der Mehrzahl vorgegebener Metriken kann in Beispielen umfassen, eine Bezugsgröße zwischen der Trainingsdatenreihe 11a und der Messdatenreihe 11b zu bestimmen. In Beispielen kann die Mehrzahl vorgegebener Metriken Metriken umfassen, die zwischen Phasen-, Magnituden- und Steigungsfehlern unterscheiden. Beispielsweise können diese Metriken aus einzelnen Fehleranteilen, zum Beispiel eine Differenz zwischen zwei Zeitpunkten der Trainingsdatenreihe 11a und der Messdatenreihe 11b, dazu dienen, über eine gewichtete Summe eine Validierungsmetrik zu bestimmen. In Beispielen können die Mehrzahl vorgegebener Metriken dazu dienen, eine Quantifizierung dafür bereitzustellen, wie gut eine Simulation eine Messung nachbildet.

In Beispielen kann die Validierungsmetrik eine Summe einer oder mehrerer Summanden umfassen. In Beispielen kann der eine oder die mehreren Summanden gewichtet sein. Zum Beispiel können die optimierten Parameter die Gewichte $c_0, c_1, c_2, ... c_i$ der Summanden umfassen. Die Summanden können die einen oder mehreren Metriken $M_1, M_2, ... M_i$ umfassen. Beispielsweise kann die Validierungsmetrik mathematisch folgendermaßen ausgedrückt werden:

$$ R = c_0 + c_1 M_1 + c_2 M_2 + c_3 M_3 + \cdots + c_i M_i $$

In Beispielen kann die Validierungsmetrik die Randbedingung, dass die Summe der Parameter den Wert 1 ergeben, umfassen: $c_0 + c_1 + c_2 + \cdots + c_i = 1$.

In Beispielen kann das Bestimmen 110 der Validierungsmetrik das Berechnen einer Regressionskurve umfassen. In Beispielen kann die Beurteilung der Trainingsdatenreihe 11a die abhängigen Variablen der Regressionskurve umfassen und die unabhängigen Variablen der Regressionskurve die Koeffizienten umfassen. Zum Beispiel kann die berechnete Regressionskurve die zu bestimmende Validierungsmetrik umfassen. Zum Beispiel kann die abhängige Variable $R$ die Beurteilung der Trainingsdatenreihe 11a umfassen. Zum Beispiel kann die unabhängige Variable die Koeffizienten $c_0$, $c_1, c_2, ... c_i$ umfassen.

**Fig. 4** illustriert schematisch eine beispielhafte Architektur zur Ausführung des Verfahrens zum Bestimmen einer Validierungsmetrik.

In Beispielen kann die Augenscheinvalidierung auf einem Bewertungsintervall basieren. Die Beurteilung der Trainingsdatenreihe 11a kann einen Vektor mit einer Mehrzahl von Einträgen umfassen. In Beispielen kann jeder Eintrag eine Bewertung eines Experten 12 umfassen. Zum Beispiel kann jeder Eintrag des Vektors einen Wert aus dem Bewertungsintervall umfassen. In Beispielen können sich mehrere Experten 12 die Trainingsdatenreihe 11a einer Simulation mit einer ersten Parametrierung und die Messdatenreihe 11b einer Messung anschauen, wie in Fig. 4 veranschaulicht. Das Ergebnis kann ein Vektor pro Simulation sein, der eine Mehrzahl von Einträgen umfasst. Das Ergebnis der Augenscheinvalidierung ergibt eine Beurteilung der entsprechenden Simulationsergebnisse. In Beispielen kann die Trainingsdatenreihe 11a Ergebnisse eine Mehrzahl von Simulationen umfassen. In Beispielen kann die Trainingsdatenreihe 11a Ergebnisse eine Mehrzahl von Simulationen mit verschiedenen ersten Parametrierungen umfassen. In Beispielen kann die Messdatenreihe 11b Ergebnisse einer Mehrzahl von Messungen umfassen. In Beispielen kann die Beurteilung der Trainingsdatenreihe 11a einen Vektor für jede Simulation umfassen. Die Augenscheinvalidierung kann für eine Mehrzahl von Simulationen, optional mit unterschiedlichen ersten Parametrierungen, und eine Mehrzahl von Messungen durchgeführt werden, sodass die Beurteilung der Trainingsdaten 11a eine Matrix umfasst. Die Spalten der Matrix können in Beispielen jeweils den Vektor mit den Bewertungseinträgen der mehreren Experten pro Simulation umfassen.

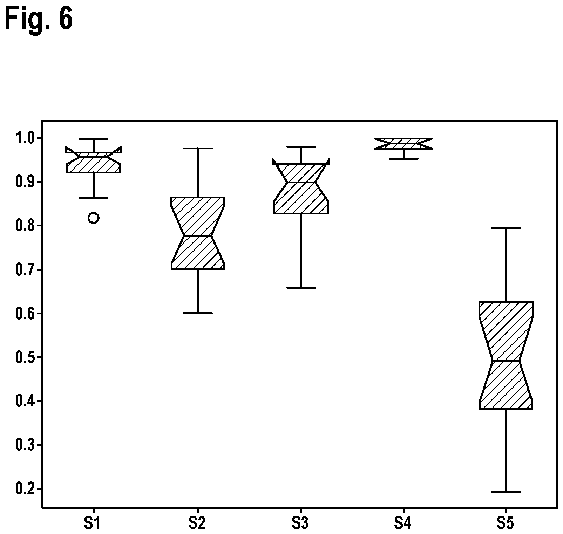

**Fig. 6** illustriert schematisch die Beurteilung von ersten Datenreihen 11a einer Mehrzahl von Simulationen S1 bis S5 in Form eines Boxplots.

In Beispielen kann das Bewertungsintervall Werte zwischen 0 und 10 umfassen. In Beispielen kann das Bewertungsintervall Werte zwischen 0 und 1 oder zwischen 0 und 100 umfassen. In Beispielen kann dabei 0 für die schlechteste Modellgüte stehen. Wie in **Fig. 6** dargestellt, sieht man beispielsweise bei der vierten Simulation $S_4$, dass die mehreren Experten die erste Datenreihe 11a, die Ergebnisse dieser dritten Simulation umfasst, in ihrer Beurteilung der Simulation näher beieinander liegen als beispielsweise bei der fünften Simulation $S_5$ und die Simulation als besser (nahe 1.0) bewertet haben. In Beispielen kann die Beurteilung der Trainingsdatenreihe 11a in einer Datenbank 13 abgespeichert sein.

In Beispiel kann das Berechnen der Regressionskurve das Anpassen der Parameter umfassen, sodass die Regressionskurve, das heißt, die zu bestimmende Validierungsmetrik, bis zu einem vorgegebenen Grad die Beurteilung der Trainingsdatenreihe 11a repräsentiert. Hierfür werden Werte für die Parameter $c_0, c_1, c_2, \ldots c_i$ bestimmt, sodass die Regressionskurve die Beurteilung der Trainingsdatenreihe 11a bis zu einem vorgegebenen Grad repräsentiert. In Beispielen kann die Regressionskurve durch den Median der jeweiligen Beurteilung einer Simulation verlaufen. In Beispielen kann die Bestimmung der Parameter eine Optimierung der Parameter umfassen. Die Optimierung der Parameter kann dabei umfassen, dass die Parameter bis zu einem bestimmten Grad optimiert werden und nicht zwingend zum (absoluten) Optimum optimiert werden.

In Beispielen kann das Auswählen 113 der einen oder mehreren Metriken aus der Mehrzahl von Metriken und das Bestimmen 110 der Validierungsmetrik mittels einer LASSO-Regression durchgeführt werden. In Beispielen können einzelne Metriken der Mehrzahl von Metriken korreliert sein. In Beispielen kann das Auswählen 113 der einen oder mehreren Metriken das Weglassen korrelierter Metriken der Mehrzahl von Metriken umfassen. In Beispielen kann die Vorgabebedingung auf deren Grundlage das Auswählen durchgeführt wird, einen Korrelationskoeffizienten umfassen. Dies kann vorteilhaft sein, um die Anzahl der Metriken für die Validierungsmetrik zu reduzieren, ohne die Genauigkeit der Validierungsmetrik zu verschlechtern. In Beispielen kann das Auswählen mittels einer "Least Absolute Shrinkage and Selection Operator"-(LASSO)-Regression durchgeführt werden. Dabei kann die absolute Summe der unabhängigen Variablen, d.h. der zu bestimmenden Parameter, begrenzt sein. In Beispielen kann dies dazu führen, dass einige Parameter null werden, was gleichbedeutend damit sein kann, dass die Metriken, die mit den entsprechenden Parametern gewichtet werden, aus der Validierungsmetrik entfernt werden. In Beispielen kann das Auswählen der einen oder mehreren Metriken auf Basis einer "minimum-redundancy-maximum-relevant"-(mRMR)-Selektion durchgeführt werden.

In Beispielen kann das Verfahren 100 das Aufteilen der Trainingsdatenreihe 11a und/oder der Messdatenreihe 11b in einen oder mehrere Abschnitte umfassen. In Beispielen kann die Mehrzahl vorgegebener Metriken die Länge eines Abschnitts der jeweiligen Datenreihe 11a, 11b umfassen. In Beispielen kann der eine Abschnitt oder die mehreren Abschnitte zeitlichen Abschnitten entsprechen. In Beispielen kann die Länge eines Abschnitts mittels eines ersten Zeitpunkts und eines zweiten Zeitpunkts definiert sein. Dies kann dazu dienen, eine Validierungsmetrik bereitzustellen, die in einem bestimmten Zeitabschnitt Gültigkeit hat. Dies kann vorteilhaft sein, Zeitabschnitten mit unterschiedlichen Charakteristiken jeweils gültige Validierungsmetriken bereitzustellen.

In Beispielen kann die Mehrzahl vorgegebener Metriken mindestens eines von mittlerer absoluter Fehler, mittlere quadratische Abweichung, Median der absoluten Abweichung, Kreuzkorrelation, normalisierte mittlere quadratische Abweichung, und/oder Sprague Geers umfassen.

In Beispielen kann bei Berechnung der Regressionskurve eine Normalverteilung von Störgrößen angenommen werden und Konfidenzintervalle über Erwartungswert und Varianz berechnet werden. In Beispielen können die Störgrößen externe Kräfte auf eine Zahnstangenlenkung umfassen. In Beispielen können nichtparametrische Methoden zur Bestimmung der Konfidenzintervalle benutzt werden, wie zum Beispiel "Bootstrapping".

In Beispielen kann das Verfahren 100 das erneute Berechnen der Regressionskurve umfassen, wenn beispielsweise ein Konfidenzintervall der Validierungsmetrik zu groß wird.

In Beispielen kann das Verfahren Auslegen, unter Verwendung einer Simulation mit Sollparametrierung, einer Fahrzeugfunktion, einer Roboterfunktion, einer Gebäudeautomatisierungsfunktion, einer Elektrowerkzeugautomatisierungsfunktion, und/oder einer Haushaltsgeräteautomatisierungsfunktion umfassen.

In Beispielen kann das Verfahren Verwenden der Validierungsmetrik zur Validierung einer neuen Simulation umfassen. In Beispielen kann die neue Simulation die Simulation einer Fahrzeugfunktion, einer Roboterfunktion, einer Gebäudeautomatisierungsfunktion, einer Elektrowerkzeugautomatisierungsfunktion, und/oder einer Haushaltsgeräteautomatisierungsfunktion umfassen.

In Beispielen kann die Simulation mit Sollparametrierung eine Simulation einer Fahrzeugfunktion umfassen (insbesondere zur Steuerung einer Fahrfunktion). Zum Beispiel kann die Fahrzeugfunktion eine Funktion zum autonomen und/oder assistierten Fahren umfassen. In Beispielen kann die Fahrzeugfunktion eine Regelung und/oder Steuerung einer Zahnstangenlenkung umfassen. In der Simulation kann beispielsweise ein bestimmter Lastfall (externe Kraft) auf die Zahnstangenlenkung angewandt werden. In Beispielen kann die Simulationen einen Positionsregler der Zahnstangenlenkung umfassen. Die Ausgabe der Simulation kann die Zahnstangenposition je nach Lastfall umfassen. In Beispielen kann mittels der Validierungsmetrik eine Modellgüte für die Simulation der Zahnstangenlenkung bestimmt werden.

In anderen Beispielen kann die Simulation mit Sollparametrierung eine Simulation einer Roboterfunktion umfassen (insbesondere zur Steuerung einer Bewegungsfunktion eines Roboters). Zum Beispiel kann die Roboterfunktion eine Funktion zur Querführung und/oder Längsführung des Roboters sein.

In einem Beispiel kann die Simulation mit Sollparametrierung eine Simulation einer Gebäudefunktionen umfassen (insbesondere zur Steuerung von Gebäudeautomatisierungsfunktionen). Zum Beispiel kann die Gebäudefunktion eine Funktion zum Regeln von Raumtemperatur, Beleuchtung und/oder Sicherheitseinrichtung sein.

In einer Ausführungsform kann das computerimplementierte Verfahren 100 das Anwenden der Validierungsmetrik auf ein Maschinelles-Lernen-Modell zur Bestimmung der Modellgüte umfassen. In Beispielen kann das Verfahren Verwenden des Maschinelles-Lernen-Modells, um eine Fahrzeugfunktion, eine Roboterfunktion, eine Gebäudeautomatisierungsfunktion, eine Elektrowerkzeugautomatisierungsfunktion, und/oder eine Haushaltsgeräteautomatisierungsfunktion zu steuern und/oder zu regeln, umfassen. In Beispielen kann das Verfahren 100 das Einspielen des Maschinelles-Lernen-Modells auf ein Computersystem eines Fahrzeugs, eines Roboters, eines Gebäudes, eines Elektrowerkzeugs, eines Haushaltsgeräts, einer Werkzeugmaschine, eines persönlichen Assistenten, eines Zutrittskontrollsystems, und/oder eines Medizingeräts umfassen.

Offenbart wird weiterhin ein Computersystem, das dafür ausgelegt ist, das computerimplementierte Verfahren 100 zur Parametrierung einer Simulation auszuführen. Das Computersystem kann mindestens einen Prozessor und/oder mindestens einen Arbeitsspeicher umfassen. Das Computersystem kann weiterhin einen (nicht-volatilen) Speicher umfassen. In Beispielen können alle Schritte des Verfahrens 100 von dem Computersystem ausgeführt werden. In manchen Beispielen können einzelne Schritte des Verfahrens 100 durch das Computersystem ausgeführt werden. Optional können Ergebnisse einzelner Verfahrensschritte, die nicht durch das Computersystem ausgeführt werden, von dem Computersystem empfangen werden. In Beispielen kann das Computersystem eine Benutzer-Schnittstelle umfassen, um eine Augenscheinvalidierung der Trainingsdatenreihe 11a auf Basis eines Vergleichs zur Messdatenreihe 11b zu empfangen. In Beispielen kann das Computersystem eine Cloud umfassen, in denen zumindest Teile des computerimplementierten Verfahrens 100 ausgeführt werden. In Beispielen kann die Validierungsmetrik mittels einer Web-App Benutzern bereitgestellt werden. In Beispielen kann das Computersystem ausgelegt sein, Simulationsergebnisse von Benutzer mittels einer CI/CD-Pipeline zu empfangen und eine Modellgüte des Simulationsmodells anzuzeigen. In Beispielen kann die Sollparametrierung mittels einer Web-App Benutzern bereitgestellt werden. In Beispielen kann das Computersystem ausgelegt sein, Simulationsergebnisse von Benutzern mittels einer CI/CD-Pipeline zu empfangen und eine Modellgüte und/oder eine Sollparametrierung des Simulationsmodells zu übermitteln.

Offenbart wird weiterhin ein Computerprogramm, das dafür ausgelegt ist, das computerimplementierte Verfahren 100 zur Parametrierung einer Simulation auszuführen. Das Computerprogramm kann z.B. in interpretierbarer oder in kompilierter Form vorliegen. Es kann (auch in Teilen) zur Ausführung z.B. als Bit- oder Byte-Folge in den RAM eines Computers geladen werden.

Offenbart wird weiterhin ein computerlesbares Medium oder Signal, das das Computerprogramm oder mindestens einen Teil davon speichert und/oder enthält. Das Medium kann z.B. eines von RAM, ROM, EPROM, HDD, SDD, ... umfassen, auf/in dem das Signal gespeichert wird.

## Patentansprüche

1. Computerimplementiertes Verfahren (100) zur Parametrierung einer Simulation, insbesondere für eine Simulation zur Auslegung einer Fahrzeugfunktion, wobei das Verfahren umfasst:

    - Bestimmen (110) einer Validierungsmetrik auf Basis einer Bestimmung (111) von Koeffizienten unter Verwendung einer Beurteilung einer Trainingsdatenreihe (11a), die erste Ergebnisse einer Simulation mit einer ersten Mehrzahl von Parametrierungen umfasst, wobei die Beurteilung der Trainingsdatenreihe (11a) das Ergebnis eines Vergleichs zwischen der Trainingsdatenreihe (11a) und einer Messdatenreihe (11b) in Form einer Augenscheinvalidierung umfasst,
    - Empfangen (120) einer Testdatenreihe, die zweite Ergebnisse einer Simulation mit einer zweiten Mehrzahl von Parametrierungen umfasst,

- Anwenden (130) der Validierungsmetrik auf die Testdatenreihe und Bestimmen einer Mehrzahl von Validierungswerten in Abhängigkeit der zweiten Mehrzahl von Parametrierungen, und
- Bestimmen (140) einer Sollparametrierung für die Simulation auf Basis der Mehrzahl von Validierungswerten.

2. Computerimplementiertes Verfahren (100) gemäß Anspruch 1, wobei das Bestimmen (140) der Sollparametrierung das Optimieren oder Nahezu-Optimieren einer Funktion umfasst, die sich aus der Abhängigkeit zwischen der Mehrzahl von Validierungswerten und der zweiten Mehrzahl von Parametrierungen ergibt.

3. Computerimplementiertes Verfahren (100) gemäß Anspruch 1 oder 2, wobei die Sollparametrierung einem maximalen oder einem nahezu maximalen Wert der Mehrzahl von Validierungswerten entspricht.

4. Computerimplementiertes Verfahren (100) gemäß Anspruch 1, 2, oder 3, wobei die Sollparametrierung ein Intervall für einen oder mehrere Parameter umfasst.

5. Computerimplementiertes Verfahren (100) gemäß einem der vorhergehenden Ansprüche, wobei das Bestimmen (110) der Validierungsmetrik das Berechnen einer Regressionskurve umfasst, und wobei die Beurteilung der Trainingsdatenreihe (11a) die abhängigen Variablen der Regressionskurve umfasst und die unabhängigen Variablen der Regressionskurve die Koeffizienten umfassen.

6. Computerimplementiertes Verfahren (100) gemäß einem der vorhergehenden Ansprüche, wobei die Augenscheinvalidierung auf einem Bewertungsintervall basiert, und die Beurteilung der Trainingsdatenreihe (11a) einen Vektor mit einer Mehrzahl von Einträgen umfasst, wobei jeder Eintrag eine Bewertung eines Experten (12) umfasst und wobei jeder Eintrag des Vektors einen Wert aus dem Bewertungsintervall umfasst.

7. Computerimplementiertes Verfahren (100) gemäß einem der vorhergehenden Ansprüche, wobei das Bestimmen (110) der Validierungsmetrik umfasst:

- Anwenden (112) einer Mehrzahl vorgegebener Metriken auf die Trainingsdatenreihe (11a) und die Messdatenreihe (11b), und
- Auswählen (113) einer oder mehrerer Metriken aus der Mehrzahl von Metriken auf der Grundlage einer Vorgabebedingung.

8. Computerimplementiertes Verfahren (100) gemäß Anspruch 7, wobei die Validierungsmetrik eine Summe einer oder mehrerer Summanden umfasst, wobei der eine oder die mehreren Summanden gewichtet sind, wobei die bestimmten Koeffizienten die Gewichte der Summanden umfassen und die Summanden die einen oder mehreren Metriken umfassen.

9. Computerimplementiertes Verfahren (100) gemäß Anspruch 7 oder 8, wobei das Auswählen der einen oder mehreren Metriken aus der Mehrzahl von Metriken und das Bestimmen der Validierungsmetrik mittels einer LASSO-Regression durchgeführt werden.

10. Computerimplementiertes Verfahren (100) gemäß Anspruch 7, 8, oder 9, wobei das das Bestimmen (110) der Validierungsmetrik umfasst

- Aufteilen der Trainingsdatenreihe (11a) und/oder der Messdatenreihe (11b) in einen oder mehrere Abschnitte, und wobei die Mehrzahl vorgegebener Metriken die Länge eines Abschnitts der jeweiligen Datenreihe (11a, 11b) umfasst.

11. Computerimplementiertes Verfahren (100) gemäß einem Ansprüche 7 bis 10, wobei die Mehrzahl vorgegebener Metriken mindestes eines von mittlerer absoluter Fehler, mittlere quadratische Abweichung, Median der absoluten Abweichung, Kreuzkorrelation, normalisierte mittlere quadratische Abweichung, und/oder Sprague Geers umfasst.

12. Computerimplementiertes Verfahren (100) gemäß einem der vorhergehenden Ansprüche, wobei das Verfahren umfasst

- Auslegen, unter Verwendung einer Simulation mit Sollparametrierung, einer Fahrzeugfunktion, einer Roboterfunktion, einer Gebäudeautomatisierungsfunktion, einer Elektrowerkzeugautomatisierungsfunktion, und/oder einer Haushaltsgeräteautomatisierungsfunktion.

13. Computersystem, dafür ausgelegt, das computerimplementierte Verfahren (100) zum Bestimmen einer Validierungsmetrik für die Bestimmung einer Modellgüte gemäß einem der vorhergehenden Ansprüche 1 bis 12 auszuführen.

14. Computerprogramm, umfassend Befehle, die bei der Ausführung des Computerprogramms durch ein Computersystem dieses veranlassen, das computerimplementierte Verfahren (100) zum Bestimmen einer Validierungsmetrik für die Bestimmung einer Modellgüte gemäß einem der vorhergehenden Ansprüche 1 bis 12 auszuführen.

15. Computerlesbares Medium oder Signal, das das Computerprogramm gemäß Anspruch 14 speichert und/oder enthält.

# Fig. 1

100

110

120

130

140

# Fig. 2

11a

Parameter c_f

# Fig. 3

11b

11a

Zeit in s

# Fig. 4

# Fig. 5

Fig. 6

**EP 4 645 149 A1**

EUROPÄISCHER RECHERCHENBERICHT

Nummer der Anmeldung

EP 24 17 2983

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| Y | DE 10 2021 109129 A1 (BOSCH GMBH ROBERT [DE]) 13. Oktober 2022 (2022-10-13) * Abbildungen 1-4 * * Absatz [0015] - Absatz [0062] * ----- | 1-15 | INV. G06F30/20 ADD. G06F30/15 |
| Y | DE 10 2020 201183 A1 (BOSCH GMBH ROBERT [DE]) 5. August 2021 (2021-08-05) * Abbildung 1 * * Absatz [0003] - Absatz [0010] * * Absatz [0014] - Absatz [0018] * ----- | 1-15 | |

RECHERCHIERTE SACHGEBIETE (IPC)

G06F

Der vorliegende Recherchenbericht wurde für alle Patentansprüche erstellt

| Recherchenort | Abschlußdatum der Recherche | Prüfer |
|---|---|---|
| München | 11. Oktober 2024 | Riegler, Jörg |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 17 2983

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2024

| Im Recherchenbericht angeführtes Patentdokument | Datum der Veröffentlichung | Mitglied(er) der Patentfamilie | Datum der Veröffentlichung |
|---|---|---|---|
| DE 102021109129 A1 | 13-10-2022 | KEINE | |
| DE 102020201183 A1 | 05-08-2021 | KEINE | |

Für nähere Einzelheiten zu diesem Anhang : siehe Amtsblatt des Europäischen Patentamts, Nr.12/82

EPO FORM P0461